# EUROPÄISCHE PATENTSCHRIFT

(11) **EP 4 192 636 B1**
(45) Veröffentlichungstag und Bekanntmachung des Hinweises auf die Patenterteilung: **14.02.2024**
(21) Anmeldenummer: 21763257.9
(22) Anmeldetag: 06.08.2021
(51) Int. Cl.: B22D 11/103, B22D 11/106, B22D 11/113, B22D 41/00, B22D 41/04, B22D 41/08, B22D 41/12, B22D 41/14, B22D 41/16, B22D 41/50

(54) **ANLAGE ZUM CHARGIEREN, SCHMELZEN UND GIESSEN VON METALL UND METALLLEGIERUNGEN UNTER VAKUUM UND/ODER SCHUTZGASATMOSPHÄRE UND VERFAHREN ZUM QUASI KONTINUIERLICHEN SCHMELZEN UND GIESSEN VON METALL UNTER VAKUUM UND/ODER SCHUTZGASATMOSPHÄRE**
SYSTEM FOR CHARGING, MELTING AND CASTING METAL AND METAL ALLOYS IN A VACUUM AND/OR SHIELDING GAS ATMOSPHERE AND METHOD FOR QUASI-CONTINUOUS MELTING AND CASTING OF METAL IN A VACUUM AND/OR SHIELDING GAS ATMOSPHERE
SYSTÈME POUR CHARGER, FAIRE FONDRE ET COULER DES MÉTAUX ET DES ALLIAGES MÉTALLIQUES DANS UNE ATMOSPHÈRE DE GAZ SOUS VIDE ET/OU DE PROTECTION ET PROCÉDÉ DE FUSION ET DE COULÉE QUASI CONTINUES DE MÉTAL DANS UNE ATMOSPHÈRE DE GAZ SOUS VIDE ET/OU DE PROTECTION

(30) Priorität: 06.08.2020 DE 102020209989
(43) Veröffentlichungstag der Anmeldung: 14.06.2023
(73) Patentinhaber: SMS Group GmbH, 40237 Düsseldorf (DE)
(72) Erfinder: DEMIRCI, Cihangir, 47807 Krefeld (DE)
(74) Vertreter: Kross, Ulrich
(86) Internationale Anmeldenummer: PCT/EP2021/072029
(87) Internationale Veröffentlichungsnummer: WO 2022/029301

(56) Entgegenhaltungen:
- DE-A1- 19 546 340
- DE-T2- 69 520 779
- GB-A- 2 013 120
- US-A- 3 450 823

## Beschreibung

Die Erfindung betrifft eine Anlage zum Chargieren, Schmelzen und Gießen von Metall und Metalllegierungen unter Vakuum und/oder Schutzgasatmosphäre umfassend wenigstens eine Vakuum-Induktions-Schmelzeinrichtung.

Eine solche Anlage ist beispielsweise aus der DE 1952 083 A bekannt. Die DE 2 349 744 A betrifft ein Verfahren und eine Vorrichtung zum kontinuierlichen Vergießen von über sich verbrauchende Elektroden zugeführte vorlegierte Metalle. Die DE 11 2009 001 950 T5 betrifft ein Verfahren und eine Vorrichtung zum Versiegeln eines Gussblocks am Beginn des Stranggießprozesses.

Weiterer Stand der Technik ist aus den Druckschriften EP 0 518 536 A1, KR 10-1090429, US 3,779,743, US 3,888,300, WO 2015/101552 A1, DE 20 174 69 A1, DE 36 40 269 C1, EP 0 869 854 B1, EP 1 042 087 B1, JP 2013 039 588 A, US 6,070,649 und US 2016/0052049 A1 bekannt. Insbesondere die DE 1952 083 A betrifft ein unter Vakuum durchgeführtes Stranggussverfahren zum Vergießen von Metallen oder anderen Materialien, die eine Entgasung erfordern und die in der Wärme in Gegenwart normaler atmosphärischer Bedingungen reagieren. Die bekannte Anlage weist eine Vakuumkammer auf, in der eine Pfanne als Vorratsbehälter für das flüssige Metall angeordnet ist. Unter der Pfanne ist ein Verteiler in Form eines Trichters angeordnet, der das flüssige Metall aufnimmt und es in einen Zulauf verteilt, der ein gleichmäßiges Vergießen des flüssigen Metalls aus dem Verteiler in eine Kokille einer Stranggießanlage ermöglicht, die als Form für das durchlaufende flüssige Metall dient. Bei dem bekannten Verfahren erfolgt das Gießen unter Vakuum.

Bei bekannten Anlagen mit Vakuum-Induktions-Schmelzeinrichtungen ist ein Schmelztiegel in einer festen geschlossenen und großen Ofenkammer angeordnet. Die Größe der Ofenkammer wird üblicherweise so bemessen, dass der Tiegel, ausgehend von seiner Schmelzstellung bei senkrechter Tiegelachse bzw. bei 0° um einen Winkel von größer als 90° gekippt werden muss, um die komplette Schmelze aus dem Tiegel restlos in die Kokille entleeren zu können, die ebenfalls in der geschlossenen Ofenkammer steht. Diese klassische Bauweise erfordert Ofenkammern mit großem Innenvolumen, was entsprechend lange Evakuierungszeiten bei einem hohen Verbrauch an Schutzgasen erfordert.

Das Wechselspiel zwischen Evakuierung auf ein Druckniveau von weniger als 0,01 mbar und das Fluten auf atmosphärischen Druck erfordert teure und schwere Ofenkammern. Solche Anlagentypen sind beispielsweise aus den US-PS 3 460 604 und US-PS 2 788 270 bekannt.

Weiterhin sind im Stand der Technik Vakuum-Induktions-Schmelzanlagen mit einem Oberofen bekannt, bei denen der Schmelztiegel mit einem Vakuumflansch gegen den Oberofen angehoben wird und mit diesem eine geschlossene Vakuum Schmelzkammer bildet. Diese besitzt ein geringes Innenvolumen, sodass die Evakuierungszeit niedrig ist und mit relativ geringer Saugleistung erfolgen kann. Der Verbrauch an teurem Inertgas verringert sich ebenfalls. Solche Anlagentypen sind aus der DE 100 302 25 C1, CN 134539 A und EP 1 166 31 A1 bekannt.

Weiterhin sind Atmosphärische Vorherdgießöfen mit Tiegelinduktor hinlänglich bekannt. Der atmosphärische Vorherdgießöfen besteht aus einem keramisch ausgekleideten Ofengefäß, an das ein Tiegelinduktor zur Beheizung der Schmelze angeflanscht wird. Zur Vermeidung von Gasaufnahme hat der Ofen eine Abdeckung. Die Befüllung des Ofens erfolgt rückwärtig mittels Rinnen oder Pfannen oder seitlich durch die Kipplager des Ofens. Hierdurch ist eine Befüllung während des kontinuierlichen Gießens möglich. Der Ofen verfügt weiterhin über eine Abschlackschnauze und eine Notausgießvorrichtung, so dass er ggf. durch einfaches Zurückkippen entleert werden kann. Die Metalldosierung in die Stranggießanlage erfolgt über den angeflanschten Vorherd mit Stopfen und Gießdüse. Zum Wechseln der Düsen oder für Arbeiten an der Stranggießanlage kann der Ofen auch bei maximalem Füllstand zurückgekippt oder seitlich verfahren werden.

Ebenfalls bekannt sind atmosphärisch betriebene Stranggießanlagen. Stranggießen ist ein kontinuierliches oder semikontinuierliches Gießverfahren zum Herstellen von Halbzeug aus Eisen- und Nichteisenlegierungen. Beim Stranggießen wird das flüssige Metall oder Nichteisenmetall durch eine gekühlte bodenlose Kokille gegossen und mit erstarrter Schale und meist noch flüssigem Kern nach unten, seitwärts abgezogen. Nach dem Durcherstarren wird der Strang geteilt. Je nach der Kokillenanordnung wird zwischen horizontalen und vertikalen Stranggieß-Verfahren unterschieden. Horizontales Stranggießen wird aber nur für Nichteisenmetalle angewendet. Vertikale Stranggießanlagen mit gebogener Kokille gießen ein vorgebogenes Halbzeug, um es horizontal abziehen zu können. Das Halbzeug muss dann nach dem Erreichen der Horizontalen, vor dem Trennen, gerichtet werden. Mit vertikalen Kokillen ist entweder die Länge vom Gussstück durch die Anlagenhöhe begrenzt, oder der Strang muss mit noch flüssigem Kern gebogen und nach Erreichen der Horizontalen wieder gerichtet werden.

Eine Anlage gemäß Oberbegriff von Anspruch 1 ist aus der DE 695 20 779 T2 bekannt. Weiterer Stand der Technik ist aus den Veröffentlichungen US 3,450,823 A, GB 2013 120 A und DE 195 46 340 A1 bekannt.

Der Erfindung liegt die Aufgabe zugrunde, eine Anlage zum Chargieren, Schmelzen und Gießen von Metall und Metalllegierungen unter Vakuum und/oder Schutzgasatmosphäre bereitzustellen, die ein im Wesentlichen kontinuierliches Gießen oder ein semikontinuierliches Gießen zum Herstellen von Halbzeugen aus Eisen- und Nichteisenlegierungen ermöglichen. Insbesondere soll eine Anlage bereitgestellt werden, die eine Aufrechterhaltung von Vakuum und/oder Schutzgasatmosphäre mit verhältnismäßig geringem Evakuierungsaufwand während des Chargierens, Schmelzens und Gießens aufrechterhält.

Der Erfindung liegt weiterhin die Aufgabe zugrunde, ein entsprechendes Verfahren zum quasi kontinuierlichen Schmelzen und Gießen von Metall unter Vakuum und/oder Schutzgasatmosphäre bereitzustellen.

Die Aufgabe wird gelöst durch eine Anlage mit den Merkmalen des Anspruchs 1, sowie durch ein Verfahren mit den Merkmalen des Anspruchs 11.

Vorteilhafte Ausgestaltungen der Erfindung ergeben sich aus den Unteransprüchen.

Ein Gesichtspunkt der Erfindung betrifft eine Anlage zum Chargieren, Schmelzen und Gießen von Metall- und Metall- Legierungen unter Vakuum und/oder Schutzgasatmosphäre, umfassend wenigstens eine Vakuum-Induktions-Schmelzeinrichtung, Mittel zum Chargieren von Ausgangsstoffen unter Vakuum und/oder Schutzgas in die wenigstens eine Vakuum-Induktions-Schmelzeinrichtung, wenigstens eine Vakuum-Induktions-Gießeinrichtung, die an die wenigstens eine Vakuum-Induktions-Schmelzeinrichtung anschließbar ist, wobei die Vakuum-Induktions-Gießeinrichtung wenigstens eine Speicherkammer umfasst, die gasdicht an eine Stranggießanlage oder eine Pulververdüsungsanlage als nachgeschaltetes Aggregat ankoppelbar ist, wobei diese wenigstens zwei Vakuum-Induktions-Schmelzeinrichtungen umfasst, die gasdicht an die Vakuum-Induktions-Gießeinrichtung anschließbar sind und die dazu ausgebildet sind, wechselweise jeweils einen Gießverteiler zu beschicken, der die Schmelze unter Vakuum und/oder Schutzgasatmosphäre der Speicherkammer der Vakuum-Induktions-Gießeinrichtung übergibt.

Der Gießverteiler kann beispielsweise als Verteilerkammer ausgebildet sein, die sich jeweils von einer Ofenkammer einer Induktions-Schmelzeinrichtung in die Speicherkammer der Vakuum-Induktions-Gießeinrichtung erstreckt. Dies kann über entsprechend abgedichteten Durchführungen in den Ofenkammern und in der Speicherkammer erfolgen.

Vorzugsweise kommunizieren die Speicherkammer und der Vorherd der Vakuum-Induktions-Gießeinrichtung miteinander. Auf diese Art und Weise ist es möglich, die Speicherkammer der Vakuum-Induktions-Gießeinrichtung wechselweise aus dem einen oder anderen Induktions-Schmelzofen zu beschicken. Auf diese Art und Weise kann ein im Wesentlichen kontinuierlicher oder quasi kontinuierlicher Gießvorgang aufrechterhalten werden.

Unter Metall und Metalllegierungen im Sinne der vorliegenden Anmeldung werden Metall- und Nichteisenmetall-Legierungen verstanden. Darunter fallen auch sogenannte Hochleistungslegierungen oder Superlegierungen.

Schutzgase im Sinne der vorliegenden Erfindung können sein Argon, Stickstoff oder Helium. Auch wenn die Begriffe Vakuum-Induktions-Schmelzeinrichtung einerseits und Vakuum-Induktions-Gießeinrichtung andererseits einen ausschließlichen Betrieb unter Vakuum suggerieren, so ist erfindungsgemäß vorgesehen, dass diese Einrichtungen sowohl für den Betrieb unter Vakuum als auch für den Betrieb unter Schutzgasatmosphäre ausgelegt sind.

Das Chargieren und Aufschmelzen sowie das Gießen erfolgt erfindungsgemäß mit verschiedenen Einrichtungen, die jeweils für sich genommen unter Schutzgasatmosphäre und/oder Vakuum betrieben werden können und die zur Übergabe der Schmelze von der Vakuum-Induktions-Schmelzeinrichtung in die Vakuum-Induktions-Gießeinrichtung miteinander kommunizieren und gasdicht aneinander anschließbar sind sowie ohne nennenswerten Verlust von Vakuum und/oder Schutzgasatmosphäre voneinander entkoppelbar sind.

Bei einer zweckmäßigen Variante der Anlage gemäß der Erfindung ist vorgesehen, dass die Vakuum-Induktions-Gießeinrichtung wenigstens einen Vorherd umfasst, der wenigstens eine Stopfengießvorrichtung aufweist, die dazu ausgebildet ist, die Schmelze unter Vakuum und/oder Schutzgasatmosphäre in das nachgeschaltete Aggregat zu übergeben.

Das nachgeschaltete Aggregat kann beispielsweise eine Stranggießanlage oder eine Pulververdüsungsanlage sein. Die Stranggießanlage kann beispielsweise als vertikale Stranggießanlage, horizontale Stranggießanlage oder auch eine kombinierte Gieß-Walzanlage sein, die kontinuierlich oder teilkontinuierlich betrieben wird.

Bei einer bevorzugten Variante der Anlage gemäß der Erfindung ist vorgesehen, dass der Vorherd wenigstens eine Faltenbalgabdichtung zum gasdichten Anschluss an das nachgeordnete Aggregat umfasst.

Zweckmäßigerweise ist wenigstens eine der Vakuum-Induktions-Schmelzeinrichtungen als Vakuum-Induktions-Schmelzeinrichtung mit einem Oberofen ausgebildet. Ein Schmelztiegel der Vakuum-Induktions-Schmelzeinrichtung bildet mit dem Oberofen eine geschlossene und gasdicht absperrbare Ofenkammer.

Bei einer vorteilhaften Ausgestaltung der Anlage gemäß der Erfindung ist vorgesehen, dass wenigstens eine Vakuum-Induktions-Schmelzeinrichtung wenigstens einen um eine Kippachse schwenkbaren Schmelztiegel umfasst, der die Schmelze in einer gekippten Stellung unter Vakuum und/oder Schutzgasatmosphäre in einen Gießverteiler übergibt.

Besonders vorteilhaft ist es, wenn der Schmelztiegel gemeinsam mit dem Oberofen in Kipplagern gehalten wird, sodass der Oberofen und der Schmelztiegel zwecks Entleerung des Schmelztiegels in den Gießverteiler um eine sich vorzugsweise horizontal erstreckende Kippachse schwenkbar sind.

Bei einer weiterhin sehr vorteilhaften Variante der Anlage gemäß der Erfindung ist vorgesehen, dass die Vakuum-Induktions-Gießeinrichtung ebenfalls um eine Kippachse drehbar gelagert ist, derart, dass die Schmelze von dem Vorherd in die Speicherkammer und zurück verlagerbar ist. Das ist insbesondere vorteilhaft, wenn die Vakuum-Induktions-Gießeinrichtung von der nachgeschalteten Anlage abgekoppelt werden soll.

Dabei ist es weiterhin von Vorteil, wenn die Gießeinrichtung quer zu der Kippachse verfahrbar ist, sodass die Zugänglichkeit der Stopfengießvorrichtung bzw. der Gießdüse zu Wartungszwecken gewährleistet ist.

Zweckmäßigerweise umfasst die Vakuum-Induktions-Gießeinrichtung wenigstens zwei weitere Faltenbalgabdichtungen zum gasdichten Anschluss der Speicherkammer an die Vakuum-Induktions-Schmelzeinrichtungen.

Die Faltenbalgabdichtung kann zwei metallene Dichtflansche mit Dichtmitteln umfassen, die mit Dichtflächen an Anschlüssen der Vakuum-Induktions-Schmelzeinrichtungen und der Vakuum-Induktions-Gießeinrichtung zusammenwirken und die einen die Dichtflansche verbindenden Balg aufweist.

Die Dichtflansche können mit wenigstens einem absperrbaren Anschluss an eine Schutzgasleitung und/oder an ein Vakuumsystem versehen sein.

Die der Erfindung zugrunde liegende Aufgabe wird weiterhin gelöst durch ein Verfahren zum quasi kontinuierlichen Schmelzen und Gießen von Metall unter Vakuum und/oder Schutzgasatmosphäre unter Verwendung wenigstens zweier Vakuum-Induktions-Schmelzeinrichtungen und wenigstens einer Vakuum-Induktions-Gießeinrichtung, die an die Vakuum-Induktions-Schmelzeinrichtungen gasdicht anschließbar ist, wobei das Verfahren ein Chargieren und Schmelzen von Metall in wenigstens einer Vakuum-Induktions-Schmelzeinrichtung, eine abwechselnde Beschickung einer Speicherkammer der Vakuum-Induktions-Gießeinrichtung über jeweils einen Gießverteiler und eine kontinuierliche Übergabe der Schmelze unter Vakuum und/oder Schutzgasatmosphäre an eine Stranggießanlage oder eine Pulververdüsungsanlage als nachgeschaltetes Aggregat umfasst.

Das Verfahren kann unter Verwendung einer Anlage mit den vorstehend beschriebenen Merkmalen durchgeführt werden.

In der Vakuum-Induktions-Schmelzeinrichtung ist vorzugsweise eine Behandlung der Schmelze unter Vakuum und/oder Schutzgasatmosphäre vorgesehen. Beispielsweise kann die Behandlung der Schmelze eine Begasung mittels wenigstens eines Spülsteins mittels wenigstens eines Prozessgases umfassen. Die Behandlung der Schmelze kann eine Begasung und oder ein Rühren und/oder eine Evakuierung der Schmelze bei verschiedenen Druckniveaus umfassen. Das Rühren kann beispielsweise als induktives Rühren mit einstellbaren Phasenverschiebungswinkeln oder festem Rührwinkel sowie mit fester oder einstellbarer Frequenz bei verschiedenen Vakuum- und/oder Schutzgas Druckniveaus von mindestens 1000 mbar bis 0,001 mbar erfolgen. Dabei erfolgt eine komplette Entgasung der Schmelze sowie eine Entfernung von unerwünschten Begleitelementen.

Die Behandlung der Schmelze kann unter Videoüberwachung stattfinden.

Die Schmelze wird vorzugsweise aus einem Schmelztiegel in eine vorgewärmte Verteilerrinne als Gießverteiler übergeben.

Die Verteilerrinne kann beispielsweise über eine gasdicht an die Vakuum-Induktions-Schmelzeinrichtung anschließbare Wechselkammer eingebracht werden, welche als Schleusenkammern ausgebildet ist.

Ein Chargieren der Ausgangsstoffe in Form von Rohstoffen, Schrotten, Spänen, Legierungselementen und Betriebsstoffen kann oberhalb der Vakuum-Induktions-Gießeinrichtung und über Chargierkammern mittels Chargierkörben erfolgen. Die Chargierkammern sind ebenfalls gasdicht gegenüber der Atmosphäre verschließbar und können evakuiert und/oder mit Schutzgas geflutet werden.

Die Erfindung wird nachstehend anhand eines Ausführungsbeispiels der Anlage in den beigefügten Zeichnungen erläutert.

Es zeigen:
- Figur 1: eine Ansicht der Anlage gemäß der Erfindung,
- Figur 2: eine schematische Darstellung einer vertikalen Stranggießanlage als nachgeschaltetes Aggregat,
- Figur 3: eine schematische Darstellung einer horizontalen Stranggießanlage als nachgeschaltetes Aggregat,
- Figur 4: eine schematische Darstellung einer Kreisbogen Stranggießanlage als nachgeschaltetes Aggregat,
- Figur 5: eine schematische Darstellung einer Gieß-Walzanlage als nachgeschaltetes Aggregat,
- Figur 6: eine schematische Darstellung einer Pulververdüsungsanlage als nachgeschaltetes Aggregat,
- Figur 7: eine schematische Schnittansicht der Anlage gemäß Figur 1 entlang der Schnittebene VI-VI in Figur 1 und
- Figur 8: eine schematische Darstellung einer Faltenbalgabdichtung gemäß der Erfindung.

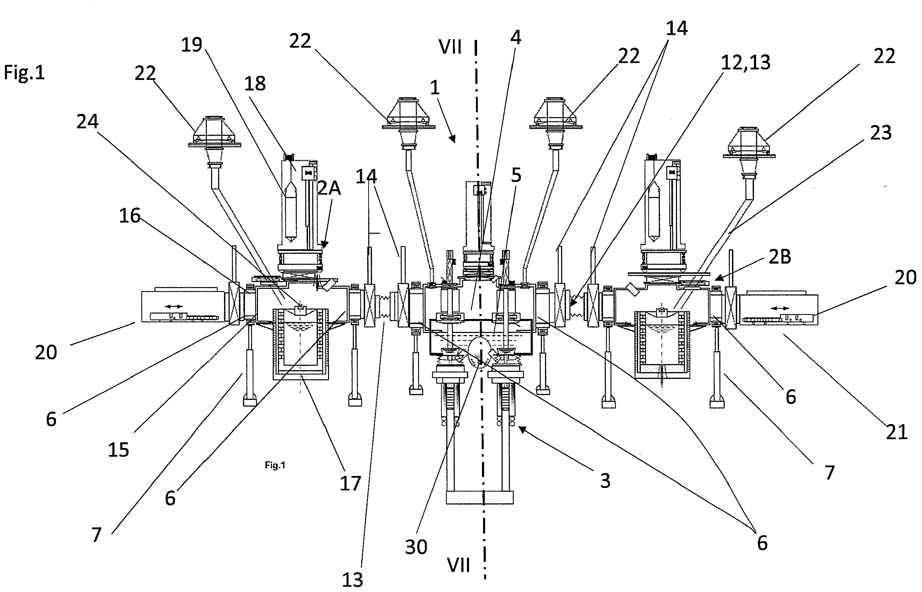

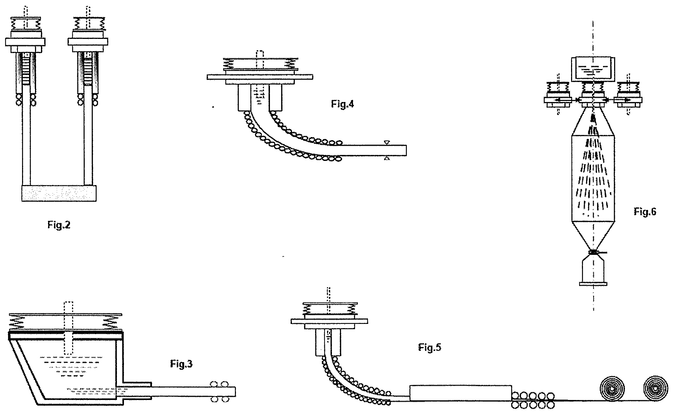

Die in Figur 1 dargestellte Anlage umfasst eine Vakuum-Induktions-Gießeinrichtung 1 und zwei an die Vakuum-Induktions-Gießeinrichtung 1 angeschlossene Vakuum-Induktions-Schmelzeinrichtungen 2A, 2B. Bei dem dargestellten Ausführungsbeispiel ist die Vakuum-Induktions-Gießeinrichtung 1 an eine vertikale Stranggießanlage 3 als nachgeschaltetes Aggregat angekoppelt. Anstelle dieser vertikalen Stranggießanlage 3 können die in den Figur 3-6 dargestellten Aggregate vorgesehen sein.

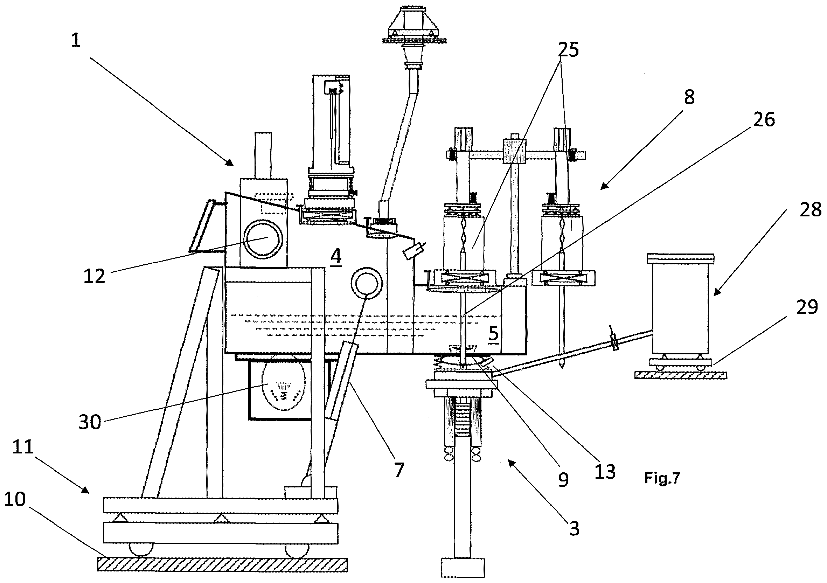

Wie dies insbesondere aus der Schnittansicht in Figur 7 erkennbar ist, umfasst die Vakuum-Induktions-Gießeinrichtung 1 eine Speicherkammer 4 und einen Vorherd 5, die miteinander kommunizieren. Innerhalb der Speicherkammer 4 ist ein Tiegelinduktor 30 angeordnet, der die Schmelze auf Gießtemperatur hält.

Die Anordnung umfassend die Speicherkammer 4 und den Vorherd 5 in Kipplagern 6 um eine horizontale Achse schwenkbar gelagert (siehe Figur 1) und mittels wenigstens einer Kolben-Zylinder-Anordnung 7 um die horizontale Achse drehbar gelagert.

Die Vakuum-Induktions-Gießeinrichtung 1 umfasst zwei Stopfengießvorrichtungen 8 sowie zugehörige Gießdüsen 9, über die schmelzflüssiges Metall an das jeweils nachgeschaltete Aggregat, beispielsweise an die vertikale Stranggießanlage 3, übergeben werden kann. Weiterhin ist die Vakuum-Induktions-Gießeinrichtung 1 auf einen auf Schienen 10 verfahrbaren Untergestell 11 angeordnet, über die die Vakuum-lnduktions-Gießeinrichtung 1 quer ihrer Kippachse verfahrbar ist. Die Vakuum-Induktions-Gießeinrichtung 1 ist auf Wiegezellen des Untergestells 11 gelagert.

Die Speicherkammer 4 der Vakuum-Induktions-Gießeinrichtung 1 ist jeweils über seitliche Durchführungen 12, welche sich durch die Kipplager 6 erstrecken, an jeweils eine Vakuum-Induktions-Schmelzeinrichtung 2A, 2B angeschlossen. Die Verbindung zwischen den Vakuum-Induktions-Schmelzeinrichtungen 2A, 2B und der Speicherkammer 4 der Vakuum-Induktions-Gießeinrichtung 1 ist mittels Faltenbalg- Abdichtungen 13 verschlossen. Die Durchführungen 12 sind weiterhin mittels Vakuumschiebern 14 verschließbar.

Das Aufschmelzen der Ausgangsstoffe erfolgt in den Vakuum-Induktions-Schmelzeinrichtungen 2A, 2B, die die Schmelze an die Speicherkammer 4 der Vakuum-Induktions-Gießeinrichtung 1 übergeben. Die Vakuum-Induktions-Schmelzeinrichtungen 2A, 2B sind im Wesentlichen identisch, sodass nachstehend nur eine der Vakuum-Induktions-Schmelzeinrichtungen 2A, 2B beschrieben wird.

Jede der Vakuum-Induktions-Schmelzeinrichtungen 2A, 2B umfasst eine Ofenkammer 15, die Teil eines Oberofens 16 ist und die mit einem Schmelztiegel 17 gasdicht verschlossen ist. Der Schmelztiegel 17 ist in bekannter Art und Weise als induktiv beheiztes Schmelzgefäß ausgebildet. Dieser wird über ein nicht dargestelltes Schienensystem an den Oberofen 16 herangefahren und von unten an diesem befestigt. Der Schmelztiegel 17 wird bei dem dargestellten Beispiel in dem Oberofen 16 gehalten. Der Oberofen 16 ist in Kipplagern 6 schwenkbar gelagert und mittels zweier Kolben-Zylinder-Anordnungen 7 um eine horizontale Schwenkachse drehbar gelagert. An die Oberseite des Oberofens 16 ist ein Chargierturm 18 angeflanscht, der ebenfalls gasdicht anschließbar ist und als Schleuse für Chargierkörbe 19 dient, die das Ausgangsmaterial in den Schmelztiegel 17 einbringen. Seitlich an die Ofenkammer 15 ist eine Wechselkammer 20 angeschlossen, über die eine Verteilerrinne 21 als Gießverteiler in die Ofenkammer 15 einbringbar ist. Die Wechselkammer 20 ist ebenfalls als Schleusenkammer ausgebildet und über einen Vakuumschieber 14 bezüglich der Ofenkammer 15 absperrbar.

Mit dem Bezugszeichen 22 sind auf Wiegezellen gelagerte Bunkeranlagen bezeichnet, die Ausgangsstoffe oder Legierungszusätze über Beschickungsleitungen 23 dem Schmelztiegel 17 und/oder der Speicherkammer 4 aufgeben können. Die Bunkeranlagen 22 und/oder Beschickungsleitungen 23 können jeweils mittels nicht näher bezeichneter Vakuumschieber zu den Ofenkammern 15 und/oder zu der Speicherkammer 4 verschlossen werden.

Bei dem Verfahren gemäß der Erfindung werden zunächst Rohstoffe über Chargierkörbe 19 den Schmelztiegeln 17 unter Vakuum und/oder Schutzgasatmosphäre zugeführt und in diesen ebenfalls unter Vakuum und/oder Schutzgasatmosphäre aufgeschmolzen, gegebenenfalls unter Beschickung mit weiteren Legierungsbestandteilen. Nach abgeschlossener Behandlung der Schmelze in einem Schmelztiegel 17 wird beispielsweise in die Ofenkammer 15 einer Vakuum-Induktions-Schmelzeinrichtung 2A eine in einer Wechselkammer 20 vorgewärmte Verteilerrinne 21 in die Ofenkammer 15 so verbracht, dass diese sich unterhalb einer Gießschnauze 24 des Schmelztiegels 17 befindet. Die Verteilerrinne 21 ist so bemessen, dass diese sich in der Gießstellung bis in die Speicherkammer 4 erstreckt. Die Vakuum-Induktions-Schmelzeinrichtungen 2A,2B haben bezüglich der Speicherkammer 4 der Vakuum-Induktions-Gießeinrichtung 1 ein Gefälle von etwa 2°. Der Schmelztiegel 17 wird um die Kipplager 6 geschwenkt, sodass sich die Schmelze in diesem vollständig in die Verteilerrinne 21 entleeren kann. Die Schmelze gelangt durch die mittels Faltenbalgabdichtung 13 verschlossenen Durchführungen 12 von der Vakuum-Induktions-Schmelzeinrichtung 2A in die Vakuum-Induktions-Gießeinrichtung 1. Über eine Regelung der Stopfengießvorrichtung 8 in dem Vorherd 5 der Vakuum-Induktions-Gießeinrichtung 1 gelangt die Schmelze dann ebenfalls unter Vakuum und/oder Schutzgas in das nachgeschaltete Aggregat. Während die Schmelze in der Vakuum-Induktions-Schmelzeinrichtung 2A gegossen wird, kann die Behandlung der Schmelze in der anderen Vakuum-Induktions-Schmelzeinrichtung 2B erfolgen, die anschließend die Schmelze zwecks Überführung in die Speicherkammer 4 der Vakuum-Induktions-Gießeinrichtung gießt.

Über eine Stopfenregelung wird die flüssige Schmelze durch die Gießdüsen 9 beispielsweise in die Stranggießkokille der vertikalen Stranggießanlage 3 dosiert.

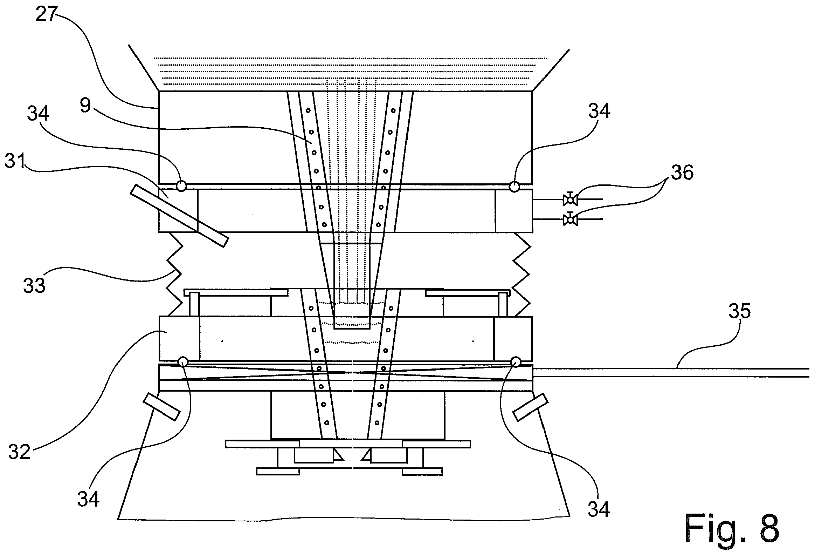

Die Stopfengießvorrichtung 8 umfasst in Stopfenkammern 25 geführte Stopfenstangen 26, die an ihrem führenden Ende einen Verschlusskörper bilden oder aufweisen und bei verschlossenen Gießdüsen 9 in diese eintauchen. Die Vakuumdichtigkeit der Stranggießkokillen wird über Vakuumflansche 27 gewährleistet, die Teil der in der Figur 8 dargestellten Faltenbalgabdichtung 13 sind.

Die Dosierung von Gießpulver in die Stranggießkokille bzw. auf die Schmelze unter Vakuum und/oder Schutzgas erfolgt durch mindestens eine vakuum- und schutzgasdichte Dosiereinrichtung 28, die auf Wiegezellen gelagert sowie auf einem verfahrbaren Wagen 29 angeordnet ist. Eine Dosierleitung, die gegen die Atmosphäre mit einem Vakuumventil geschützt ist, mündet in die Vakuumabdichtung der Schnittstelle zwischen der Vakuum-Induktions-Gießeinrichtung 1 und das nachgeschaltete Aggregat bzw. die nachgeschaltete Stranggießanlage 3.

Es wird nun Bezug genommen auf die Figur 8, die die Faltenbalgabdichtung 13 gemäß der Erfindung zeigt. Diese umfasst einen ersten und einen zweiten Dichtflansch 31,32, zwischen denen sich ein Balg 33 erstreckt. Die Dichtflansche 31,32 sind jeweils mit feuerfesten Dichtringen 34 gegen die Vakuumflansch 27 der Vakuum-Induktions-Gießeinrichtung 1 und der Stranggießanlage 3 abgedichtet. Mit 36 sind Anschlüsse für die Einbringung von Schutzgas und oder zur Evakuierung des von der Faltenbalgabdichtung umschlossenen Raums bezeichnet.

Zum Wechsel der Gießdüse 9 und/oder der Stopfenstange 26 werden die Gießdüsen 9 mit dem Verschlusskörper der Stopfenstange 26 verschlossen, sodann wird die Vakuum-Induktions-Gießeinrichtung 1 gekippt, sodass die Schmelze sich von dem Vorherd 5 in die Speicherkammer 4 verlagert. Anschließend kann die Vakuum-Induktions-Gießeinrichtung 1 auf den Schienen 10 quer zu der Kippachse verlagert werden.

Eine Abdichtung des nachgeschalteten Aggregats wird beispielsweise mit dem in Figur 8 dargestellten feuerfesten Schieber 35 bewirkt. Über eine in der Figur nicht dargestellte Ringabsaugung wird etwa aus der Vakuum Gießeinrichtung 1 austretendes Schutzgas und/oder andere Prozessgase abgesaugt.

Eine Gießspiegelregelung in der Stranggießkokille kann über eine Stopfenregelung hydraulisch und/oder pneumatisch und/oder elektromechanisch unter Vakuum und/oder Schutzgas der Videoaufzeichnung erfolgen.

### Bezugszeichenliste

- 1: Vakuum-Induktions-Gießeinrichtung
- 2A, 2B: Vakuum-Induktions-Schmelzeinrichtungen
- 3: Stranggießanlage
- 4: Speicherkammer
- 5: Vorherd
- 6: Kipplager
- 7: Kolben-Zylinder-Anordnungen
- 8: Stopfengießvorrichtung
- 9: Gießdüsen
- 10: Schienen
- 11: Untergestell
- 12: Durchführungen
- 13: Faltenbalgabdichtungen
- 14: Vakuumschieber
- 15: Ofenkammer
- 16: Oberofen
- 17: Schmelztiegel
- 18: Chargierturm
- 19: Chargierkörbe
- 20: Wechselkammer
- 21: Verteilerrinne
- 22: Bunkeranlagen
- 23: Beschickungsleitungen
- 24: Gießschnauze
- 25: Stopfenkammern
- 26: Stopfenstangen
- 27: Vakuumflansch
- 28: Dosiereinrichtung
- 29: Wagen
- 30: Tiegelinduktor
- 31: erster Dichtflansch
- 32: zweiter Dichtflansch
- 33: Balg
- 34: Dichtringe
- 35: Schieber
- 36: Anschlüsse

## Patentansprüche

1. Anlage zum Chargieren, Schmelzen und Gießen von Metall und MetallLegierungen unter Vakuum und/oder Schutzgasatmosphäre, umfassend wenigstens eine Vakuum-Induktions-Schmelzeinrichtung (2A,2B), Mittel zum Chargieren von Ausgangsstoffen unter Vakuum und/oder Schutzgas in die wenigstens eine Vakuum-Induktions-Schmelzeinrichtung (2A,2B), wenigstens eine Vakuum-Induktions-Gießeinrichtung (1) , die an die wenigstens eine Vakuum-Induktions-Schmelzeinrichtung (2A,2B) anschließbar ist, wobei die Vakuum-Induktions-Gießeinrichtung (1) wenigstens eine Speicherkammer (4) umfasst, die gasdicht an eine Stranggießanlage (3) oder eine Pulververdüsungsanlage als nachgeschaltetes Aggregat ankoppelbar ist, **gekennzeichnet durch** wenigstens eine zweite Vakuum-Induktions- Schmelzeinrichtung (2A,2B), wobei wenigstens zwei Vakuum-Induktions-Schmelzeinrichtungen (2A,2B) gasdicht an die Vakuum-Induktions-Gießeinrichtung (1) anschließbar sind und die Vakuum-Induktions-Schmelzeinrichtungen (2A,2B) dazu ausgebildet sind, wechselweise jeweils einen Gießverteiler zu beschicken, der die Schmelze unter Vakuum und/oder Schutzgas der Speicherkammer (4) der Vakuum-Induktions-Gießeinrichtung (1) übergibt.

2. Anlage nach Anspruch 1, **dadurch gekennzeichnet, dass** die Vakuum-Induktions-Gießeinrichtung (1) wenigstens einen Vorherd (5) umfasst, der wenigstens eine Stopfengießvorrichtung (8) aufweist, die dazu ausgebildet ist die Schmelze unter Vakuum und/oder Schutzgas in das nachgeschaltete Aggregat zu übergeben.

3. Anlage nach einem der Ansprüche 1 oder 2, **dadurch gekennzeichnet, dass** der Vorherd (5) wenigstens eine Faltenbalgabdichtung (13) zum gasdichten Anschluss an ein nachgeordnetes Aggregat umfasst.

4. Anlage nach einem der Ansprüche 1 bis 3, **dadurch gekennzeichnet, dass** wenigstens eine Vakuum-Induktions-Schmelzeinrichtung (2A,2B) als Vakuum-Induktions-Schmelzeinrichtung (2A,2B) mit einem Oberofen (16) ausgebildet ist, wobei ein Schmelztiegel (1) der Vakuum-Induktions-Schmelzeinrichtung mit dem Oberofen (16) eine geschlossene und gasdicht absperrbare Ofenkammer (15) bildet.

5. Anlage nach Anspruch 4, **dadurch gekennzeichnet, dass** der Oberofen um eine Kippachse schwenkbar ausgebildet ist, wobei der Schmelztiegel (17) die Schmelze in einer gekippten Stellung unter Vakuum und/oder Schutzgasatmosphäre in einen Gießverteiler übergibt.

6. Anlage nach einem der Ansprüche 1 bis 5, **dadurch gekennzeichnet, dass** die Vakuum-Induktions-Gießeinrichtung (1) um eine Kippachse drehbar gelagert ist, derart, dass Schmelze von dem Vorherd (5) in die Speicherkammer (4) und zurück verlagerbar ist.

7. Anlage nach einem der Ansprüche 1 bis 6, **dadurch gekennzeichnet, dass** die Vakuum-Induktions-Gießeinrichtung (1) vorzugsweise quer zu der Kippachse verfahrbar ist.

8. Anlage nach einem der Ansprüche 1 bis 7, **dadurch gekennzeichnet, dass** die Vakuum-Induktions-Gießeirichtung (1) zwei weitere Faltenbalgabdichtungen (13) zum gasdichten Anschluss an die Vakuum- Induktions-Schmelzeinrichtungen (2A,2B) aufweist.

9. Anlage nach einem der Ansprüche 3 bis 8, **dadurch gekennzeichnet, dass** die wenigstens eine Faltenbalgabdichtung (13) zwei metallene Dichtflansche (31,32) mit Dichtmitteln aufweist, die mit Dichtflächen an Anschlüssen der Vakuum-Induktions-Schmelzeinrichtungen (2A,2B) und der Vakuum-Induktions-Gießeinrichtung (1) zusammenwirken und die einen die Dichtflansche (31,32) verbindenden Balg (33) aufweist.

10. Anlage nach Anspruch 9, **dadurch gekennzeichnet, dass** wenigstens einer der Dichtflansche (31,32) mit wenigstens einem absperrbaren Anschluss (36) an eine Schutzgasleitung und/oder an ein Vakuumsystem versehen ist.

11. Verfahren zum quasi kontinuierlichen Schmelzen und Gießen von Metall unter Vakuum und/oder Schutzgasatmosphäre unter Verwendung wenigstens zweier Vakuum-Induktions-Schmelzeinrichtungen (2A,2B) und wenigstens einer Vakuum-Induktions-Gießeinrichtung (1), die an die Vakuum-Induktions-Schmelzeinrichtungen (2A,2B) gasdicht anschließbar ist, wobei das Verfahren ein Chargieren und Schmelzen von Metall in wenigstens einer Vakuum-Induktions-Schmelzeinrichtung (2A,2B), eine abwechselnde Beschickung einer Speicherkammer (4) der Vakuum-Induktions-Gießeinrichtung (1) über jeweils einen Gießverteiler und eine kontinuierliche Übergabe der Schmelze unter Vakuum und/oder Schutzgasatmosphäre an eine Stranggießanlage (3) oder eine Pulververdüsungsanlage als nachgeschaltetes Aggregat umfasst.

12. Verfahren nach Anspruch 11, **gekennzeichnet durch** die Verwendung einer Anlage nach einem der Ansprüche 1 bis 10.

13. Verfahren nach einem der Ansprüche 11 oder 12, **dadurch gekennzeichnet, dass** in den Vakuum-Induktions-Schmelzeinrichtungen (2A,2B) eine Behandlung der Schmelze unter Vakuum und/oder Schutzgasatmosphäre vorgesehen ist.

14. Verfahren nach einem der Ansprüche 11 bis 13, **dadurch gekennzeichnet, dass** die Behandlung der Schmelze eine Begasung und/oder ein Rühren und/oder eine Evakuierung der Schmelze bei verschiedenen Druckniveaus umfasst.

## Claims

1. Plant for charging, melting and casting of metal and metal alloys under vacuum and/or a protective gas atmosphere, comprising at least one vacuum induction melting device (2A, 2B), means for charging feedstock under vacuum and/or protective gas into the at least one vacuum induction melting device (2A, 2B), at least one vacuum induction casting device (1), which is connectible with the at least one vacuum induction melting device (2A, 2B), wherein the vacuum induction casting device (1) comprises at least one storage chamber (4), which can be gas-tightly coupled to a continuous casting plant (3) or a powder atomising plant as downstream unit, **characterised by** at least one second vacuum induction melting device (2A, 2B), wherein at least two vacuum induction melting devices (2A, 2B) are gas-tightly connectible with the vacuum induction casting device (1) and the vacuum induction melting devices (2A, 2B) are constructed for the purpose of in alternation respectively feeding a casting distributor which transfers the melt under vacuum and/or protective gas to the storage chamber (4) of the vacuum induction casting device (1).

2. Plant according to claim 1, **characterised in that** the vacuum induction casting device (1) comprises at least one forehearth (5) having at least one stopper casting device (8) which is constructed for the purpose of transferring the melt under vacuum and/or protective gas to the downstream unit.

3. Plant according to one of claims 1 and 2, **characterised in that** the forehearth (5) comprises at least one bellows seal (13) for gas-tight connection with a downstream unit.

4. Plant according to any one of claims 1 to 3, **characterised in that** at least one vacuum induction melting device (2A, 2B) is constructed as a vacuum induction melting device (2A, 2B) with an upper furnace (16), wherein a crucible (17) of the vacuum induction melting device forms together with the upper furnace (16) a closed and gas-tightly blockable furnace chamber (15).

5. Plant according to claim 4, **characterised in that** the upper furnace is constructed to be pivotable about a tilt axis, wherein the crucible (17) in a tilted setting transfers the melt under vacuum and/or a protective gas atmosphere to a casting distributor.

6. Plant according to any one of claims 1 to 5, **characterised in that** the vacuum induction casting device (1) is mounted to be rotatable about a tilt axis in such a way that melt can be displaced from the forehearth (5) to the storage chamber (4) and back.

7. Plant according to any one of claims 1 to 6, **characterised in that** the vacuum induction casting device (1) is preferably movable transversely to the tilt axis.

8. Plant according to any one of claims 1 to 7, **characterised in that** the vacuum induction casting device (1) has two further bellows seals (13) for gas-tight connection with the vacuum induction melting devices (2A, 2B).

9. Plant according to any one of claims 3 to 8, **characterised in that** the at least one bellows seal (13) comprises two metal sealing flanges (31, 32) with sealing means which co-operate with sealing surfaces at connections of the vacuum induction melting devices (2A, 2B) and the vacuum induction casting device (1) and which have a bellows (33) connecting the sealing flanges (31, 32).

10. Plant according to claim 10, **characterised in that** at least one of the sealing flanges (31, 32) is provided with at least one blockable connection (36) at a protective gas duct and/or at a vacuum system.

11. Method for quasi-continuous melting and casting of metal under vacuum and/or a protective gas atmosphere with use of at least two vacuum induction melting devices (2A, 2B) and at least one vacuum induction casting device (1), which is gas-tightly connectible with the vacuum induction melting devices (2A, 2B), wherein the method comprises charging and melting of metal in at least one vacuum induction melting device (2A, 2B), an alternating feed of a storage chamber (4) of the vacuum induction casting device (1) by way of a respective casting distributor and a continuous transfer of the melt under vacuum and/or a protective gas atmosphere to a continuous casting plant (3) or a powder atomising plant as downstream unit.

12. Method according to claim 11, **characterised by** use of a plant according to any one of claims 1 to 10.

13. Method according to one of claims 11 and 12, **characterised in that** treatment of the melt under vacuum and/or a protective gas atmosphere is provided in the vacuum induction melting devices (2A, 2B).

14. Method according to any one of claims 11 to 13, **characterised in that** the treatment of the melt comprises gas-treatment and/or agitation and/or evacuation of the melt at different levels of pressure.

## Revendications

1. Installation pour le chargement, la fusion et la coulée de métaux et d'alliages métalliques sous vide et/ou sous atmosphère protectrice, comprenant au moins un dispositif de fusion par induction sous vide (2A, 2B), des moyens pour charger des matières premières sous vide et/ou sous gaz protecteur dans ledit au moins un dispositif de fusion par induction sous vide (2A, 2B), au moins un dispositif de coulée par induction sous vide (1), qui peut être raccordé audit au moins un dispositif de fusion par induction sous vide (2A, 2B), le dispositif de coulée par induction sous vide (1) comprenant au moins une chambre d'accumulation (4), qui peut être couplée de manière étanche au gaz à une installation de coulée continue (3) ou à une installation d'atomisation de poudre en tant qu'agrégat monté en aval, **caractérisé par** au moins un second dispositif de fusion par induction sous vide (2A, 2B), au moins deux dispositifs de fusion par induction sous vide (2A, 2B) pouvant être raccordés de manière étanche au gaz au dispositif de coulée par induction sous vide (1) et les dispositifs de fusion par induction sous vide (2A, 2B) étant conçus pour alimenter alternativement chacun un distributeur de coulée qui transfère la masse fondue sous vide et/ou sous gaz protecteur à la chambre d'accumulation (4) du dispositif de coulée par induction sous vide (1).

2. Installation selon la revendication 1, **caractérisée en ce que** le dispositif de coulée par induction sous vide (1) comprend au moins un avant-creuset (5), qui présente au moins un dispositif de coulée à bouchon (8), qui est conçu pour transférer la masse fondue sous vide et/ou sous gaz protecteur dans l'agrégat monté en aval.

3. Installation selon l'une des revendications 1 ou 2, **caractérisée en ce que** l'avant-creuset (5) comprend au moins un joint à soufflet (13) pour assurer le raccordement étanche au gaz à un agrégat en aval.

4. Installation selon l'une des revendications 1 à 3, **caractérisée en ce qu'**au moins un dispositif de fusion par induction sous vide (2A, 2B) est conçu comme un dispositif de fusion par induction sous vide (2A, 2B) doté d'un four principal (16), un creuset (1) du dispositif de fusion par induction sous vide formant avec le four principal (16) une chambre de four (15) fermée et pouvant être fermée de manière étanche aux gaz.

5. Installation selon la revendication 4, **caractérisée en ce que** le four principal est conçu de manière à pouvoir pivoter autour d'un axe de basculement, le creuset (17) transférant la masse fondue dans une position basculée sous vide et/ou sous atmosphère protectrice dans un distributeur de coulée.

6. Installation selon l'une des revendications 1 à 5, **caractérisée en ce que** le dispositif de coulée par induction sous vide (1) est monté de manière à pouvoir tourner autour d'un axe de basculement, de telle sorte que la matière fondue puisse être déplacée de l'avant-creuset (5) dans la chambre d'accumulation (4) et inversement.

7. Installation selon l'une des revendications 1 à 6, **caractérisée en ce que** le dispositif de coulée par induction sous vide (1) est déplaçable de préférence transversalement à l'axe de basculement.

8. Installation selon l'une des revendications 1 à 7, **caractérisée en ce que** le dispositif de coulée par induction sous vide (1) comporte deux autres joints à soufflet (13) pour le raccordement étanche au gaz aux dispositifs de fusion par induction sous vide (2A, 2B).

9. Installation selon l'une des revendications 3 à 8, **caractérisée en ce que** ledit au moins un joint à soufflet (13) comporte deux brides d'étanchéité métalliques (31, 32) dotées de moyens d'étanchéité qui coopèrent avec des surfaces d'étanchéité au niveau des raccords des dispositifs de fusion par induction sous vide (2A, 2B) et du dispositif de coulée par induction sous vide (1) et qui présente un soufflet (33) reliant les brides d'étanchéité (31, 32).

10. Installation selon la revendication 9, **caractérisée en ce qu'**au moins l'une des brides d'étanchéité (31, 32) est pourvue d'au moins un raccordement (36) obturable à une conduite de gaz protecteur et/ou à un système de vide.

11. Procédé pour la fusion et la coulée quasi continues de métal sous vide et/ou sous atmosphère protectrice en utilisant au moins deux dispositifs de fusion par induction sous vide (2A, 2B) et au moins un dispositif de coulée par induction sous vide (1) qui peut être raccordé de manière étanche au gaz aux dispositifs de fusion par induction sous vide (2A, 2B), le procédé comprenant un chargement et une fusion de métal dans au moins un dispositif de fusion par induction sous vide (2A, 2B), une alimentation alternée d'une chambre d'accumulation (4) du dispositif de coulée par induction sous vide (1) par l'intermédiaire d'un distributeur de coulée respectif et un transfert continu de la masse fondue sous vide et/ou sous atmosphère protectrice à une installation de coulée continue (3) ou à une installation d'atomisation de poudre en tant qu'agrégat monté en aval.

12. Procédé selon la revendication 11, **caractérisé par** l'utilisation d'une installation selon l'une des revendications 1 à 10.

13. Procédé selon l'une des revendications 11 ou 12, **caractérisé en ce qu'**un traitement de la masse fondue sous vide et/ou sous atmosphère protectrice est prévu dans les dispositifs de fusion par induction sous vide (2A, 2B).

14. Procédé selon l'une des revendications 11 à 13, **caractérisé en ce que** le traitement de la masse fondue comporte une mise sous gaz et/ou un brassage et/ou une mise sous vide de la masse fondue à différents niveaux de pression.
